# EUROPEAN PATENT APPLICATION

(11) **EP 2 354 624 A1**
(43) Date of publication of application: **10.08.2011**
(21) Application number: 11153844.3
(22) Date of filing: 09.02.2011
(51) Int. Cl.: F16P 3/14

(54) **Protection device**

(30) Priority: 10.02.2010 IT MO20100026
(71) Applicant: SCM Group S.p.A., 47900 Rimini (IT)
(72) Inventor: Ferri, Mirko, 61100 Pesaro (PU) (IT); Mazza, Michele, 47900 Rimini (RN) (IT)
(74) Representative: Villanova, Massimo

(57) **Abstract**

In a numeric control multifunction machining centre for machining workpieces made of wood or of a material similar to wood, a protection device is provided for the safety of an operator that comprises a "bumper", applied to a movable head (2) of the machining centre to stop the machine in the case of contact with or proximity to an obstacle, and a series of photocells that detects the presence and/or the access of an operator in a work zone (6) that is dangerous for the operator.

## Description

### Background of the invention

The invention relates to a device for protecting an operator assigned to a machine for machining workpieces, in particular in a machining centre for machining workpieces made of wood or of a material similar to wood.

Specifically, but not exclusively, the protection device can be used in the context of a numeric control machining centre provided with at least one movable operating head, such as, for example a multifunction machining centre (boring, milling, etc) for machining panels.

Known machines for machining workpieces made of wood or of a material similar to wood are generally provided with a protection device to reduce the risk of accidents due to the impact of movable elements of the machine against the body of the operator.

A first type of safety device is known in which the movable parts (operating head, upright, etc) of the machining centre are covered by a protection ("bumper"), which is generally soft, which is provided with a system of sensors that stops the machine in the event of contact with or proximity to an obstacle. This first type of safety device nevertheless has the drawback of not ensuring the absolute safety of the operator at high speeds of the movable part.

A second type of safety device is known in which a system of sensors detects the presence and/or the access of an operator in at least one given machining zone and signals this presence/access to the machining centre, which stops the operating head if there is a risk for the operator. This known system of sensors may comprise, for example, a carpet that is sensitive to the weight of the operator, or a series of photocells. Nevertheless, this second type of safety device, in addition to being more complicated and expensive than the first one, makes it necessary to have machines of considerable length so that between the operator who is engaged in a machining zone and the movable part of the machine, which at the same time operates in another zone, there is an appropriate safety distance. Further, the operator is obliged not to leave predetermined machining zones and must pay the greatest attention in this regard, and he is further prohibited from inspecting closely workpieces being machined.

### Summary of the invention

An object of the invention is to make a safety device to ensure the safety of an operator assigned to a machine for machining workpieces which is provided with at least one movable member that must not knock against the body of the operator.

A drawback of the invention is that of enabling a relatively high operating speed of the machine for machining workpieces. Another advantage consists of the possibility for the operator to inspect closely the workpieces being machined. Such objects and advantages and still others are all achieved by the device and by the method according to one or more of the claims set out below.

### Short description of the drawings

The invention can be better understood and implemented with reference to the attached drawings, which illustrate some embodiments thereof by way of non-limiting example.

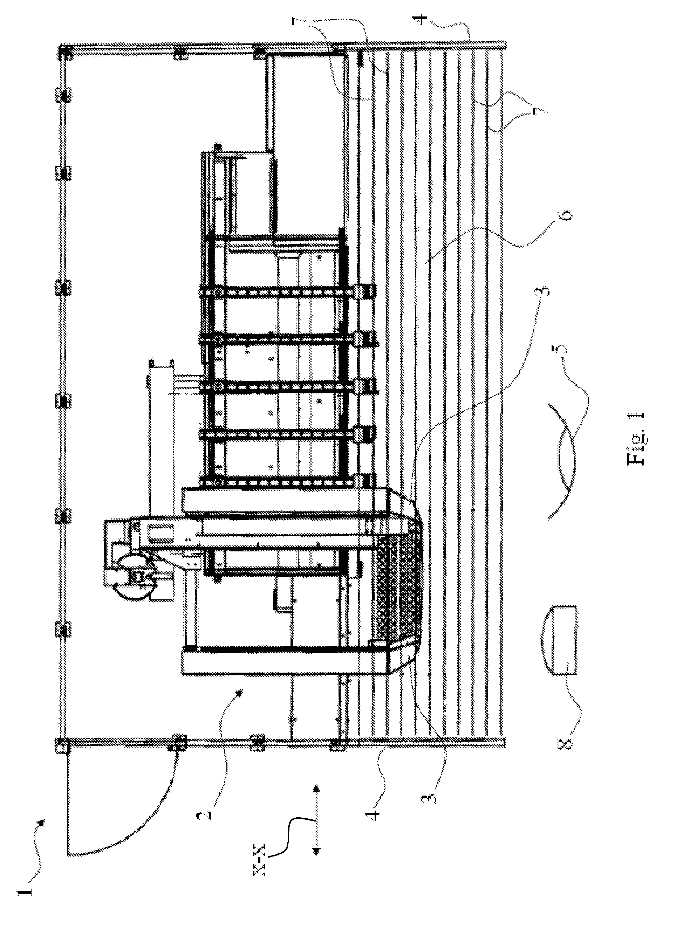

Figure 1 is a plan view of an example of a machining centre made according to the invention.

### Detailed description

With reference to figure 1, with 1 there has been indicated overall a numeric control multifunction machining centre for machining workpieces (for example in the form of panels) made of wood or of material that is similar to wood. The machining centre comprises at least one operating head 2 that is movable according to one or more machining axes, in particular according to at least one machining axis x-x. The operating head 2 can be configured in a known manner (for example by the use of at least one spindle), to perform several tasks, for example for milling, for boring, etc.

The machining centre is provided with a protection device that comprises at least a first sensor system 3 and at least a second sensor system 4.

The first sensor system 3 is applied to a movable part of the machining centre 1, for example to the operating head 2 as in the specific case, and is configured for detecting a contact or proximity of the aforesaid movable part with or to an obstacle (for example with the body of an operator 5 who is assigned to the machining centre). The first sensor system 3 may comprise, for example, a "bumper" of known type that is already used for the same purpose in the context of a machining centre.

The second sensor system 4 is configured for detecting the presence and/or the access of an operator in at least one given dangerous work area 6 of the machining centre 1. The work area 6 may be, in particular, the area where there is the risk that the movable operating head 2 may knock against the body of the operator. The second sensor system 4 may comprise, as in the specific case, a series of photocells arranged for transmitting and receiving radiation beams 7 in the work area 6. The second sensor system may comprise other types of sensors, such as, for example, a carpet that is sensitive to the weight of the operator positioned in the work area 6.

The machining centre 1 is provided with a control system (for example a central processing unit) connected to the first sensor system 3 and to the second sensor system 4, as well as to the movable operating head 2. The control system is configured for operating (selectively) in a first safety mode or in a second safety mode.

The first safety mode is activated when the first sensor system 3 ("bumper") detects a contact or proximity of the movable part (operating head 2) with or to an obstacle (the operator 5). The control system is configured in such a manner that, in the first safety mode, the movable part of the machining centre is locked immediately.

The second safety mode is activated when the second sensor system 4 (presence and/or access sensors) detects the presence and/or the access of an operator in the work area 6 that is a risk for the safety of the operator.

The control system is programmed in such a manner that, once the second safety mode has been activated, the movable part (head 2) of the machining centre cannot exceed a preset maximum speed threshold; this threshold is a safety threshold below which the first sensor system 3 is able to ensure the safety of the operator in the event of an accidental blow against the head 2. This threshold can be suitably preset. The control system can be configured for operating (selectively) in a third safety mode when the second sensor system has not detected any presence and/or access of an operator in the dangerous work area 6. In this third safety mode the movable part (head 2) of the machining centre can exceed the maximum speed threshold, according to the machining programme with which it has been set.

The protection device may comprise a safety-mode change system configured in such a manner that an operator can command the switch from one safety mode to another, in particular from the second safety mode to the third safety mode.

The safety-mode change system may comprise, as in the specific case, an operator interface 8 connected to the control system. The operator interface 8 may comprise any known type of interface (console with hardware keys, touchscreen, with remote control, etc). The operator interface 8 is arranged outside the work area 6.

The safety-mode change system (operator interface 8) is configured in such a manner as to be drivable only by an operator positioned outside the aforesaid dangerous work area 6.

If the aforesaid safety-mode change system is present, the control system is configured in such a manner as to switch from the second safety mode to the third safety mode only by driving the safety-mode change system (operator interface 8). In operation, the control system will be programmed to command the operating elements of the machining centre (in particular the operating head 2) according to a pre-ordered series of instructions, in function of the machining to be performed on a workpiece. The machining programme may comprise machining steps in which the operating head 2 has to move at a relatively high speed.

The control system will also lock the operating head 2 (or other movable elements that could risk the safety of the operator assigned to the machine) as soon as the first sensor system 3 detects the contact or the proximity with or to an obstacle, placing the entire system in the first safety condition.

The control system will further slow the operating head 2 (or other movable elements that are at risk) as soon as the second sensor system 4 detects the presence and/or the access of an operator in the dangerous area 6, placing the system in the second safety condition. Slowing will occur if, at the moment of detection, the head 2 has an operating speed that is greater than the (preset) threshold speed dangerous for the operator. Otherwise, slowing will not be necessary.

The control system will anyway prevent the safety threshold from being exceeded even if the machining programme foresees the safety threshold from being exceeded, at least for as long as the second safety condition remains set.

In the event of an absence of detection by both the first sensor system 3 and the second sensor system 4, the control system will operate in the third safety condition in which exceeding the safety threshold is permitted. In this condition, the operating head 2 can machine at high operating speeds (above the safety threshold) without danger for the operator.

The first safety condition will be cancelled, enabling the operating head 2 to restart, only after the control system has been given one or more appropriate emergency situation release commands.

The second safety condition will be cancelled, enabling the operating head 2 to resume machining at a relatively high speed (beyond the safety threshold), upon the command of an operator run by the interface 8 or through the effect of the operator leaving the dangerous area.

The work area 6 that is monitored by the second sensor system 4 can be, as in the specific case, greater than the work area in which the movable part of the machine moves that represents a danger to the safety of the operator. In the specific case, for example, the monitored work area 6 extends by about 70 centimetres (in a horizontal direction) compared with the maximum area occupied by the operating head 2 in the whole of the possible movements thereof.

## Claims

1. Protection device comprising:
a. at least a first sensor system (3) applied to a movable part (2) of a machine for machining workpieces, the movement of said movable part (2) representing a risk to the safety of an operator assigned to the machine, said first sensor system (3) being configured for detecting a contact or a proximity of said movable part (2) with or to an obstacle;
b. at least a second sensor system (4) configured for detecting the presence and/or the access of an operator (5) in at least a given work area (6);
c. a control system connected to said first sensor system (3) and to said second sensor system (4), said control system being configured for operating in a first safety mode or in a second safety mode, said first safety mode being activated when said first sensor system (3) detects a contact or a proximity of said movable part (2) with or to an obstacle, said second safety mode being activated when said second sensor system (4) detects the presence and/or the access of an operator (5) in said given work area (6).

2. Device according to claim 1, wherein, in said second safety mode, said control system is configured for controlling said movable part (2) of machine such that said movable part (2) is prevented from exceeding a preset operating speed threshold.

3. Device according to claim 2, wherein said control system is configured for operating in a third safety mode, when said second sensor system (4) does not detect the presence and/or the access of an operator (5) in said given work area (6), wherein said movable part (2) of machine is permitted to exceed said maximum threshold.

4. Device according to claim 3, comprising at least one safety-mode change system (8) configured so that an operator (5) can command said control system to pass from said second safety mode to said third safety mode.

5. Device according to claim 4, wherein said safety-mode change system (8) is configured so as to be drivable only by an operator (5) positioned outside said given work area (6).

6. Device according to claim 4 or 5, wherein said control system is configured to switch from said second safety mode to said third safety mode only by driving said safety-mode change system (8).

7. Device according to any preceding claim, wherein, in said first safety mode, said control system is configured for immediately locking said movable part (2) of machine.

8. Numeric-control multifunction machining centre (1) for machining workpieces made of wood or of a material similar to wood, comprising at least a movable part (2) and a protection device made according to any preceding claim.

9. Method for controlling a machining centre (1) according to the preceding claim, wherein said movable part of machine is controlled according to a first safety mode when said first sensor system detects a contact or proximity of said movable part with or to an obstacle, and according to a second safety mode when said second sensor system detects the presence and/or the access of an operator in said given dangerous work area.

10. Method according to claim 9, wherein according to said first safety mode said movable part of machine is locked immediately, and according to said second safety mode said movable part of machine is controlled so as not to exceed a preset maximum speed threshold.

11. Method according to claim 9 or 10, wherein said movable part of machine is controlled so as to be able to exceed said speed threshold when said second sensor system does not detect the presence and/or the access of an operator in said given dangerous work area.
